**Europäisches Patentamt**

**European Patent Office**

**Office européen des brevets**

(11) Veröffentlichungsnummer: **0 498 503 A1**

# EUROPÄISCHE PATENTANMELDUNG

(21) Anmeldenummer: **92200275.3**

(22) Anmeldetag: **28.01.92**

(51) Int. Cl.5: **G11B 19/247**

(30) Priorität: **31.01.91 DE 4102796**

(43) Veröffentlichungstag der Anmeldung:
**12.08.92 Patentblatt 92/33**

(84) Benannte Vertragsstaaten:
**PT**

(71) Anmelder: **Deutsche Thomson-Brandt GmbH
Hermann-Schwer-Strasse 3 Postfach 1307
W-7730 Villingen-Schwenningen(DE)**

(72) Erfinder: **Baas, Dieter
Sofienstrasse 10
W-7640 Kehl-Auenheim(DE)**

(54) **Verfahren zur Verkürzung der Zugriffszeit.**

(57) 2.1 Bei Wiedergabegeräten, die mit konstanter Bahngeschwindigkeit eine rotierende Platte abtasten, wird beim Spurspringen von einer Spur zur einer Zielspur der Drehzahlregelkreis geöffnet und die Drehzahl der Platte mittels eines zweiten Regelkreises auf den für die Zielspur erforderlichen Wert geregelt. Sobald der Abtaster die Zielspur erreicht hat, wird der Drehzahlregelkreis wieder geschlossen.

2.2 Um den zweiten Regelkreis einzusparen, wird vor dem Abspielen für jede Platte das Pulsbreitenverhältnis des Steuersignals ermittelt und gespeichert, das erforderlich ist, damit ein Elektromotor die Platte mit der für eine bestimmte Spur vorgeschriebenen Drehzahl dreht. Beim Spurspringen wird aus dem gespeicherten Pulsbreitenverhältnis das für die Zielspur erforderliche Pulsbreitenverhältnis berechnet. An den Elektromotor wird ein Steuersignal mit dem berechneten Pulsbreitenverhältnis gelegt, damit sich die Drehzahl der Platte auf den für die Zielspur erforderlichen Wert einstellt. Sobald die Zielspur erreicht ist, wird der Drehzahlregelkreis wieder geschlossen.

2.3 CD-Spieler, Videoplattenspieler, DRAW-Disc-Spieler und magneto-optische Geräte.

EP 0 498 503 A1

Die Erfindung betrifft ein Verfahren zur Verkürzung der Zugriffszeit bei einem Wiedergabegerät, das Daten mit konstanter Dahngeschwindigkeit berührunglos mittels einer Abtastvorrichtung von einer rotierenden Platte liest, die von einem Elektromotor angetrieben wird und deren Drehzahl mittels eines auf ihr aufgezeichneten Synchronsignals geregelt wird.

Es sind Wiedergabegeräte bekannt, die Daten berührungslos von einer Platte abtasten, die sich mit konstanter Winkelgeschwindigkeit dreht. Neben diesem System, das abgekürzt als CAV-System - die Abkürzung für constant angular velocity - bezeichnet wird, gibt es Wiedergabegeräte, die eine Platte mit konstanter Bahngeschwindigkeit abtasten. Diese Systeme, zu denen z.B. CDSpieler zählen, heißen daher Constant-Linear-Velocity-Systeme, abgekürzt CLV-System. Beim Abtasten der Platte von innen nach außen beginnend mit der innersten Datenspur bis zur äußersten Datenspur wird die Drehzahl der Platte von Datenspur zu Datenspur erhöht.

Die Regelung der Drehzahl der Platte erfolgt während der Datenwiedergabe mittels eines Synchronsignals, das auf der Platte aufgezeichnet ist. Bei einem CD-Spieler decodiert ein Decoder die nach der eight to fourteen modulation, abgekürzt EFM, aufgezeichneten Daten. Das Synchronsignal zur Regelung der Drehzahl der Platte, das der Decoder liefert, dient als Steuerspannung für einen Phasenregelkreis mit Nachlaufsynchronisation, der im weiteren Verlauf mit der üblichen Bezeichnung PLL abgekürzt wird.

Beim Spurspringen von einer Datenspur zur einer Zielspur wird der Regelkreis zur Regelung der Drehzahl der Platte geöffnet. Gleichzeitig wird die für die Zielspur erforderliche Drehzahl berechnet. Während nun der Lichtstrahl der optischen Abtastvorrichtung zur Zielspur springt, wird die Drehzahl der Platte mittels eines zweiten Regelkreises auf die zum Abtasten der Zielspur erforderliche Drehzahl geregelt.

Weil während des Spurspringes die augenblickliche Drehzahl nicht mehr mit Hilfe des auf der Platte aufgezeichneten Synchronsignals ermittelt werden kann, ist der zweite Regelkreis zur Ermittlung der Drehzahl mit einem Tachogenerator ausgerüstet. Wenn der Lichtstrahl an der Zielspur ankommt, hat der zweite Regelkreis die Drehzahl der Platte bereits auf den für die Zielspur erforderlichen Wert geregelt. Der zweite Regelkreis wird wieder ausgeschaltet, während gleichzeitig die Regelschleife des ersten Regelkreises geschlossen wird, damit die Drehzahl der Platte wieder mittels des auf ihr aufgezeichneten Synchronsignals geregelt werden kann.

Durch die Maßnahme, während des Spurspringes von einer gerade abgetasteten Datenspur zu einer Zielspur, die Drehzahl der Platte mittels eines zweiten Regelkreises auf den der Zielspur zugeordneten Sollwert zu regeln, werden sehr kurze Zugriffzeiten erzielt, weil sich die Platte bereits mit der richtigen Drehzahl dreht, wenn der Lichtstrahl an der Zielspur angekommen ist.

Ein Nachteil liegt aber darin, daß ein zweiter Regelkreis mit einem Tachogenerator nötig ist.

Aufgabe der Erfindung ist es daher, beim Spurspringen kurze Zugriffzeiten zu erzielen, ohne daß hierzu ein zweiter Regelkreis zur Regelung der Platte erforderlich ist.

Die Erfindung löst diese Aufgabe dadurch, daß vor Beginn der Datenwiedergabe die Abtastvorrichtung eine ausgewählte Datenspur abtastet, daß währenddessen der Elektromotor von einem pulsbreitenmodulierten Signal angesteuert wird, dessen Pulsbreitenverhältnis so lange verändert wird, bis die Platte, die der ausgewählten Datenspur zugeordnete Drehzahl erreicht hat, daß das für die ausgewählte Datenspur gefundene Pulsbreitenverhältnis gespeichert wird, daß beim Spurspringen von einer Datenspur zur einer Zielspur der Regelkreis zur Regelung der Drehzahl geöffnet wird, daß aus dem gespeicherten Pulsbreitenverhältnis das der Zielspur zugeordnete Pulsbreitenverhältnis berechnet wird, daß der Elektromotor von einem Signal mit dem berechneten Pulsbreitenverhältnis angesteuert wird und daß bei Erreichen der Zielspur der Regelkreis wieder geschlossen wird.

Am Beispiel eines CD-Spielers wird die Erfindung nun erläutert.

Weil der Elektromotor, der die Compact-Disc dreht, von einem pulsbreitenmodulierten Signal angesteuert wird, hängt die Drehzahl der Platte vom Pulsbreitenverhältnis ab.

Die Erfindung geht von der Erkenntnis aus, daß für jede Drehzahl ein bestimmtes Pulsbreitenverhältnis erforderlich ist, das sich berechnen läßt, wenn man das Pulsbreitenverhältnis für eine bekannte Datenspur kennt.

Nach dem Einlegen einer Platte wird daher zuerst eine bestimmte Datenspur, z.B. die Einlauf- oder die Auslaufspur abgetastet und mittels des auf der Platte aufgezeichneten Synchronsignals die Drehzahl der Platte auf den richtigen Wert geregelt. Das sich bei dieser Drehzahl einstellende Pulsbreitenverhältnis des Signals, mit dem der Elektromotor angesteuert wird, wird in einem Speicher gespeichert.

Beim Spurspringen von einer Datenspur zu einer Zielspur wird nun die Regelschleife des Regelkreises zur Regelung der Drehzahl der Platte geöffnet. Aus dem gespeicherten Pulsbreitenverhältnis wird das der Zielspur zugeordnete Pulsbreitenverhältnis berechnet. An den Elektromotor, der die Platte dreht, wird nun ein Steuersignal mit dem berechneten Pulsbreitenverhältnis gelegt, damit die Platte auf die für die Zielspur erforderliche Drehzahl gebracht wird. Wenn der Lichtstrahl bei der Zielspur angekommen ist, dreht sich die Platte daher wie beim Stand der Technik bereits mit der richtigen Drehzahl. Der Regelkreis kann jetzt wieder geschlossen werden, um mittels des auf der Platte aufgezeichneten Synchronsignals die Drehzahl zu regeln.

Die Zugriffzeit ist bei der Erfindung ebenso kurz wie beim Stand der Technik; jedoch benötigt die Erfindung keinerlei zusätzlichen Aufwand an Bauteilen, wie z.B. einen zweiten Regelkreis mit einem Tachogenerator.

Dadurch daß für jede Platte vor dem Abspielen individuell das Pulsbreitenverhältnis ermittelt wird, spielen unterschiedliche Plattengröße und unterschiedliche Trägheitsmomente der einzelnen Platten keinerlei Rolle.

Wie bereits erwähnt, kann für eine Compact-Disc z.B. das Pulsbreitenverhältnis für die Einlauf- oder für die Auslaufspur ermittelt werden. Es ist auch möglich, das Pulsbreitenverhältnis für mehrere bekannte Datenspuren, z.B. die Einlauf- und die Auslaufspur zu bestimmen und die ermittelten Werte zu speichern. Die gespeicherten Werte dienen als Grundlage zur Berechnung des für die Zielspur erforderlichen Pulsbreitenverhältnisses. Die Berechnung des jeweils nötigen Pulsbreitenverhältnisses kann in einem Mikroprozessor erfolgen, der in jeden CD-Spieler zu finden ist.

Die Erfindung ist für Aufzeichnungs- und/oder Wiedergabegeräte geeignet, die eine rotierende Platte berührungslos mit konstanter Bahngeschwindigkeit abtasten. Als Beispiele kommen CD-Spieler, Videoplattenspieler, DRAW-Disc-Spieler und magneto-optische Geräte in Frage.

**Patentansprüche**

1. Verfahren zur Verkürzung der Zugriffszeit bei einem Wiedergabegerät, das Daten mit konstanter Bahngeschwindigkeit berührungslos mittels einer Abtastvorrichtung von einer rotierenden Platte liest, die von einem Elektromotor angetrieben wird und deren Drehzahl mittels eines auf der Platte aufgezeichneten Synchronsignals geregelt wird, **dadurch gekennzeichnet,** daß vor Beginn der Datenwiedergabe die Abtastvorrichtung eine ausgewählte Datenspur abtastet, daß währenddessen der Elektromotor von einem pulsbreitenmodulierten Signal angesteuert wird, dessen Pulsbreitenverhältnis so lange verändert wird, bis die Platte die der ausgewählten Datenspur zugeordnete Drehzahl erreicht hat, daß das für die ausgewählte Datenspur gefundene Pulsbreitenverhältnis gespeichert wird, daß beim Spurspringen von einer Datenspur zu einer beliebigen Zielspur der Regelkreis zur Regelung der Drehzahl geöffnet wird, daß aus dem gespeicherten Pulsbreitenverhältnis das der Zielspur zugeordnete Pulsbreitenverhältnis berechnet wird, daß der Elektromotor von einem Signal mit dem berechneten Pulsbreitenverhältnis angesteuert wird und daß bei Erreichen der Zielspur der Regelkreis wieder geschlossen wird.

2. Verfahren nach Anspruch 1, **dadurch gekennzeichnet,** daß bei einem CD-Spieler das Pulsbreitenverhältnis für die Einlaufspur der Platte bestimmt und gespeichert wird.

3. Verfahren nach Anspruch 1, **dadurch gekennzeichnet,** daß bei einem CD-Spieler das Pulsbreitenverhältnis für die Auslaufspur der Platte bestimmt und gespeichert wird.

4. Verfahren nach Anspruch 1, **dadurch gekennzeichnet,** daß für mehrere Datenspuren die Pulsbreitenverhältnisse bestimmt und gespeichert werden und daß aus den gespeicherten Pulsbreitenverhältnissen das zur Zielspur gehörende Pulsbreitenverhältnis berechnet wird.

5. Verfahren nach Anspruch 4, **dadurch gekennzeichnet,** daß bei einem CD-Spieler das Pulsbreitenverhältnis für die Einlauf- und das für die Auslaufspur der Platte bestimmt und gespeichert werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | EP-A-0 123 946 (HITACHI LTD) <br> * Zusammenfassung; Ansprüche 1-7; Abbildung 7 * <br> --- | 1,4 | G11B19/247 |
| Y | PATENT ABSTRACTS OF JAPAN <br> vol. 010, no. 316 (P-510)28. Oktober 1986 <br> & JP-A-61 126 665 ( HITACHI LTD ) 14. Juni 1986 <br> * Zusammenfassung * <br> --- | 1,4 | |
| A | EP-A-0 178 657 (SONY CORPORATION) <br> * Seite 12, Zeile 1 - Seite 15, Zeile 19; Abbildungen 1,5-7 * <br> --- | 1-4 | |
| A | WO-A-8 605 310 (DEUTSCHE THOMSON-BRANDT GMBH) <br> --- | | |
| A | DE-A-3 933 974 (PIONEER ELECTRONIC CORPORATION) <br> ----- | | |

**RECHERCHIERTE SACHGEBIETE (Int. Cl.5 )**

G11B

Der vorliegende Recherchenbericht wurde für alle Patentansprüche erstellt

| Recherchenort | Abschlußdatum der Recherche | Prüfer |
|---|---|---|
| DEN HAAG | 12 MAI 1992 | DEVERGRANNE C. |